Europäisches Patentamt

European Patent Office

Office européen des brevets

(11) Veröffentlichungsnummer: **0 277 294**
**B1**

(12) **EUROPÄISCHE PATENTSCHRIFT**

(45) Veröffentlichungstag der Patentschrift: **16.01.91**

(51) Int. Cl.⁵: **B 60 K 15/04**

(21) Anmeldenummer: **87116903.3**

(22) Anmeldetag: **17.11.87**

(54) Klappe zum Verschliessen einer Karosseriemulde.

(30) Priorität: **31.01.87 DE 3702903**

(43) Veröffentlichungstag der Anmeldung:
**10.08.88 Patentblatt 88/32**

(45) Bekanntmachung des Hinweises auf die Patenterteilung:
**16.01.91 Patentblatt 91/03**

(84) Benannte Vertragsstaaten:
**DE FR GB IT**

(56) Entgegenhaltungen:
**EP-A-0 096 604**
**DE-A-3 301 072**
**DE-B-1 907 659**
**DE-U-7 631 183**
**FR-A-2 538 785**

(73) Patentinhaber: **Dr.Ing.h.c. F. Porsche
Aktiengesellschaft
Porschestrasse 42
D-7000 Stuttgart 40 (DE)**

(72) Erfinder: **Hempel, Ulrich, Dipl.-Ing. FH
Kirchstrasse 7
D-7253 Renningen (DE)**

Courier Press, Leamington Spa, England.

## Beschreibung

Die Erfindung bezieht sich auf eine Klappe zum Verschließen einer Karosseriemulde, insbesondere eine Tankklappe für ein Kraftfahrzeug, die mittels eines Scharniers drehbar angelenkt ist, wobei ein Scharnierarm an der Karosseriemulde befestigt ist.

Eine Klappe der eingangs genannten Gattung ist aus der DE—AS 1 907 659 bekannt. Dieser Anordnung haftet der Nachteil an, daß weder an der Klappe noch an der Karosseriemulde Vorkehrungen getroffen worden sind, um einerseits einen außenhautbündigen Verlauf der Klappe sicherzustellen und andererseits eine gleichbleibende umfangsseitige Fuge zwischen der Klappe und der angrenzenden Karosseriewand zu gewährleisten.

Das DE—GM 76 31 183 behandelt eine Tankklappe zum Verschließen einer den Kraftstoffeinfüllstutzen von Kraftfahrzeugen aufnehmenden Karosseriemulde, wobei die Tankklappe über ein Schnappgelenk mit der Karosseriemulde verbunden ist. Auf der dem Schnappgelenk abgekehrten Seite ist an der Innenfläche der Tankklappe ein U-förmiges Führungsstück angespritzt, in dem ein Gummipuffer verschiebbar gehalten ist, wobei der Gummipuffer mit einer schrägverlaufenden Fläche der Karosseriemulde in Verschlußstellung der Tankklappe zusammenwirkt.

Dieser Anordnung haftet der Nachteil an, daß durch den Gummipuffer lediglich der dem Schnappgelenk abgekehrte Teilbereich der Tankklappe außenhautbündig eingestellt werden kann, nicht jedoch der dem Schnappgelenk zugekehrte Bereich. Eine gleichbleibende Fuge zwischen der Tankklappe und der angrenzenden Karosserieöffnung läßt sich bei dieser Konstruktion nir schwerlich realisieren.

Aufgabe der Erfindung ist es, an einer Klappe bzw. einer Karosseriemulde solche Vorkehrungen zu treffen, daß fertigungsbedingte Toleranzen bei der Montage der Klappe in einfacher Weise ausgeglichen werden können, so daß einerseits ein außenhautbündiger Oberflächenübergang von der Klappe zur Karosserie erfolgt und andererseits eine umlaufende, gleichbleibende Fuge zwischen der Klappe und der Karosserieöffnung sichergestellt ist. Ferner soll die Montage der Klappe schnell und einfach durchführbar sein.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anbringung einer Verstelleinrichtung zwischen dem der Karosseriemulde zugekehrten Scharnierarm und der Karosseriemulde bei der Montage eine Justierung der Klappe in sämtlichen Richtungen möglich ist, wodurch sowohl die randseitige Fuge als auch der außenhautbündige Oberflächenverlauf der Klappe zur angrenzenden Karosserie in gewünschter Weise einstellbar ist. Darüber hinaus kann die Klappe schnell und einfach an der Karosseriemulde befestigt werden. Die Bauteile der Verstelleinrichtung lassen sich einfach und kostengünstig herstellen. Das einstellbare Anschlagelement trägt ebenfalls zu einer guten Justierung der Klappe bei.

Ein Ausführungsbeispiel der Erfindung ist in der Zeichnung dargestellt und wird im folgenden näher erläutert.

Es zeigt

Fig. 1 einen Horizontalschnitt durch eine Klappe zusammen mit einer einen Kraftstoffeinfüllstutzen aufnehmenden Karosseriemulde,

Fig. 2 eine Ansicht in Pfeilrichtung R der Fig. 1 auf die Karosseriemulde,

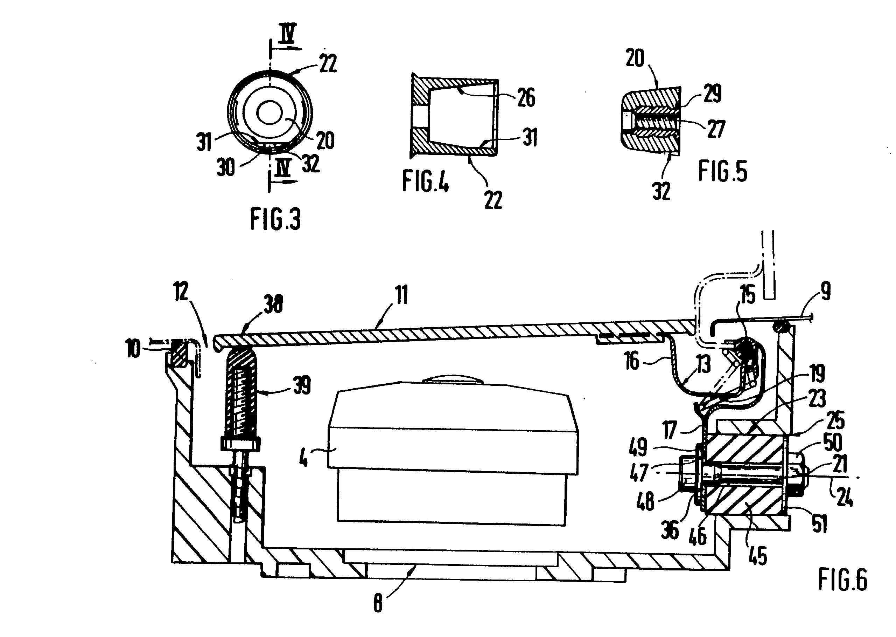

Fig. 3 eine Ansicht in Pfeilrichtung S der Fig. 1 mit der erfindungsgemäßen Verstelleinrichtung,

Fig. 4 einen Schnitt nach der Linie IV—IV der Fig. 3, der das Klemmteil zeigt,

Fig. 5 einen Schnitt nach der Linie V—V der Fig. 3, der den Spreizkegel zeigt,

Fig. 6 einen Schnitt entsprechend Fig. 1 mit einer weiteren Ausführungsform einer Verstelleinrichtung.

Eine Kraftfahrzeug-Karosserie 1 umfaßt im dargestellten Bereich eine Karosseriemulde 2, die zur versenkten Aufnahme eines Kraftstoffeinfüllstutzens 3 dient. Der endseitig mit einem lösbaren Verschlußdeckel 4 versehene Einfüllstutzen 3 ist unter Vermittlung eines aus elastischem Werkstoff bestehenden Dichtelementes 5 an einer Bodenwand 6 der Karosseriemulde 2 in Lage gehalten. Ein den Verschlußdeckel 4 tragender Abschnitt 7 des Einfüllstutzens 3 durchdringt eine Öffnung 8 der Bodenwand 6.

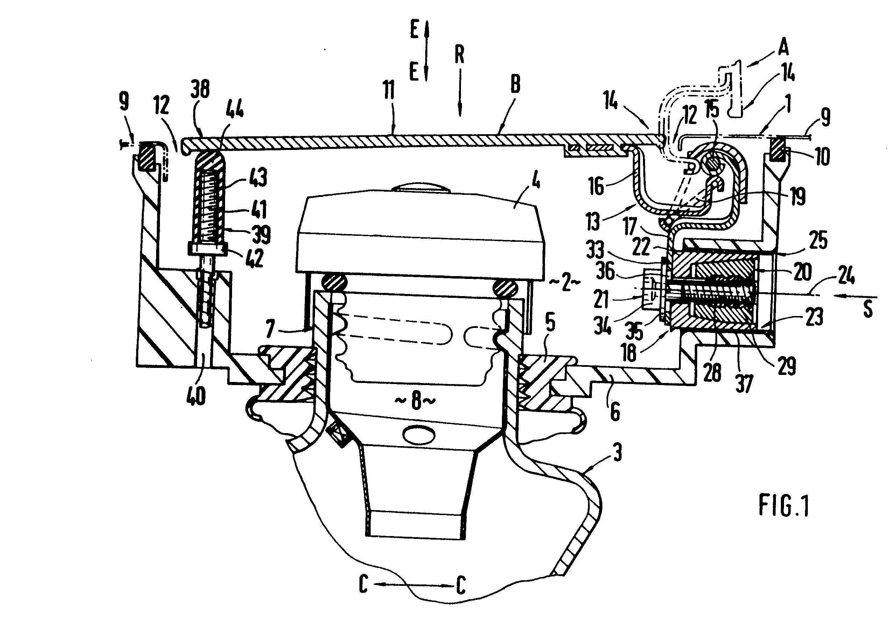

Die Karosseriemulde 2 wird gemäß Fig. 1 durch ein vorzugsweise aus Kunststoff hergestelltes, topfförmiges Bauteil gebildet, das an die Innenseite der angrenzenden Karosserieaußenwand 9 aufgesetzt und durch ein Klebeelement 10 mit dieser verbunden ist. Zur Abdeckung des Einfüllstutzens 3 ist eine schwenkbare Klappe 11 vorgesehen, die in ihrer Schließstellung außenhautbündig zur angrenzenden Karosserieoberfläche verläuft, wobei zwischen dem Rand der Klappe 11 und der Karosserieaußenwand 9 eine umlaufende Fuge 12 vorgesehen ist. Die im Ausführungsbeispiel in der Draufsicht gesehen etwa kreisrunde Klappe 11 ist unter Vermittlung eines Scharniers 13 an der Karosseriemulde 2 angelenkt, wobei das Scharnier 13 als aushebendes Scharnier ausgebildet ist, d.h., in Offenstellung A der Klappe 11 erstreckt sich der dem Scharnier 13 zugekehrte Randbereich 14 der Klappe 11 außerhalb der Karosserieaußenwand 9.

Das Scharnier 13 umfaßt zwei durch eine Scharnierachse 15 verbundene Scharnierarme 16, 17, die jeweils benachbart der Scharnierachse 15 einen U-förmigen Abschnitt aufweisen. Der Scharnierarm 16 ist mit seinem freien Ende an der Innenseite der Klappe 11 festgelegt. Der andere, der Karosseriemulde 2 zugekehrte Scharnierarm 17 ist unter Zwischenschaltung einer Verstelleinrichtung 18 an der Karosseriemulde 2 in Lage gehalten. Mit den Scharnierarmen 16, 17 verbunden ist ein Federglied 19, das die Klappe 11 sowohl in der Offenstellung A als auch in der Schließstellung B in der vorbestimmten Lage hält.

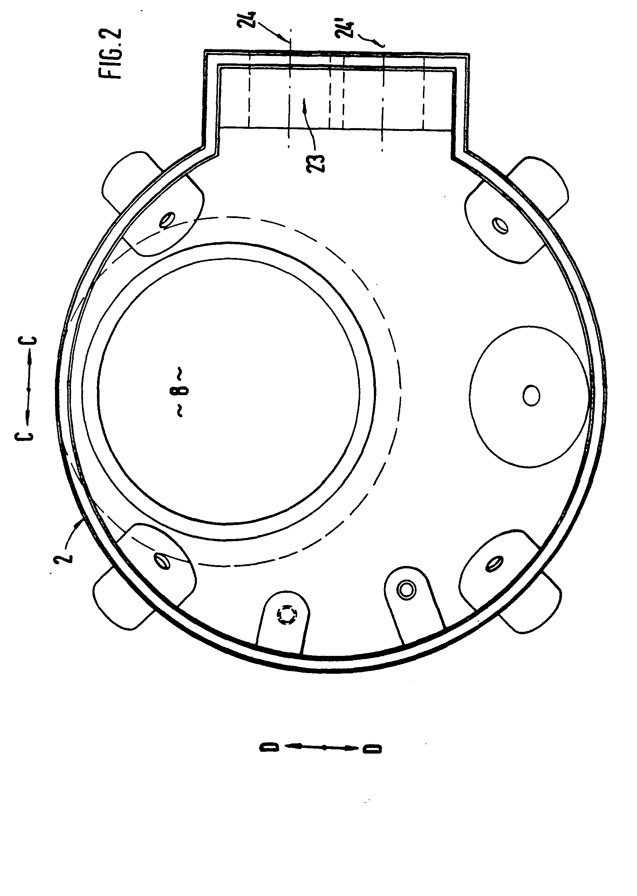

Die Verstelleinrichtung 18 umfaßt einen inneren Spreizkegel 20, ein axiales Spannelement 21, ein äußeres Klemmteil 22 und eine Aufnahme 23, die einstückig mit der Karosseriemulde 2 ausgebildet ist. Die vorzugsweise zylindrisch ausgebildete Aufnahme 23 weist eine Mittelachse 24 auf, die etwa parallel und mit Abstand zur Bodenwand 6 der Karosseriemulde 2 verläuft. Die Aufnahme 23 ist an ihren beiden Enden offen ausgebildet und weist Anfasungen 25 zum Einführen der Verstelleinrichtung 18 auf. In der Draufsicht gesehen, ist die Aufnahme 23 seitlich außerhalb der Klappe 11 angeordnet (Fig. 2). Das Klemmteil 22 und der Spreizkegel 20 werden in die Aufnahme 23 eingeführt und sind darin axial verschiebbar und festlegbar. Das eine zylindrische Außenkontur aufweisende Klemmteil 22 besitzt eine Durchgangsöffnung für das Spannelement 21 und eine kegelstumpfförmige Ausnehmung 26 zur Aufnahme des Spreizkegels 20. Der Spreizkegel 20 ist mit einem Innengewinde 27 versehen, das mit einem Außengewinde 28 des Spannelementes 21 zusammenwirkt. Durch Drehen des Spannelementes 21, das vorzugsweise durch eine Stellschraube gebildet wird, wird der Spreizkegel 20 in Richtung eines Kopfabschnittes 34 des Spannelementes 21 bewegt, wodurch das äußere Klemmteil 22 radial aufgeweitet und gegen die Innenfläche der Aufnahme 23 gespannt wird. Der Spreizkegel 20 und das Klemmteil 22 sind vorzugsweise aus Kunststoff gefertigt.

Gemäß Fig. 5 wird das Innengewinde 27 des Spreizkegels 20 durch einen Gewindeeinsatz 20 gebildet, der in den Spreizkegel 20 eingesetzt ist. Zwischen dem Spreizkegel 20 und dem Klemmteil 22 ist eine Verdrehsicherung 30 vorgesehen, die durch eine Anformung 31 am kegelstumpfförmigen Klemmteil 22 und eine korrespondierende Schräge 32 am Spreizkegel 20 gebildet wird. Der der Karosseriemulde 2 zugekehrte Scharnierarm 17 ist mit seinem freien Ende zwischen einer Stirnseite 33 des Klemmteils 22 und einer benachbart dem Kopfabschnitt 34 angeordneten Scheibe 35 eingespannt. Das Klemmteil 22 ragt auf der dem Einfüllstutzen 3 zugekehrten Seite um einen geringen Betrag aus der Aufnahme 23 heraus. Zum Hindurchführen des Spannelementes 21 ist am Scharnierarm 17 eine Bohrung 36 vorgesehen, deren Durchmesser wesentlich größer ist als der Schaftdurchmesser des Spannelementes 21.

Der Schraubenkopf 34 erstreckt sich innerhalb der Karosseriemulde 2 und ist bei geöffneter Klappe 11 frei zugänglich. Gemäß Fig. 2 sind zum Befestigen der Klappe 11 zwei mit Abstand zueinander verlaufende Aufnahmen 23 mit zugeordneten Verstelleinrichtungen 18 vorgesehen, wobei die Mittelachsen der Aufnahmen mit den Bezugszeichen 24, 24' gekennzeichnet sind.

Entsprechend Fig. 1 ist in die zylindrische Aufnahme 23 eine Lagerbuchse 37 aus Metall eingesetzt, gegen die das Klemmteil 22 mittels des Spannelements 21 und des Spreizkegels 20 gespannt wird. Durch das Klemmteil 22, das Spannelement 21 und den Spreizkegel 20 ist die Klappe 11 in Richtung C—C (Fahrzeuglängsrichtung) verschiebbar, wodurch sich eine gleichbleibende, umfangsseitige Fuge 12 zwischen der Klappe 11 und der angrenzenden Karosserieaußenwand 9 einstellen läßt. Eine Einstellbarkeit in Richtung D—D (Fahrzeugquerrichtung) und Richtung E—E (Fahrzeughochachse) wird durch die am Scharnierarm 17 angebrachte Bohrung 36 gewährleistet.

Ein dem Scharnier 13 abgekehrter Bereich 38 der Klappe 11 stützt sich in der Schließstellung B an einem in Höhenrichtung einstellbar ausgebildeten Anschlagelement 39 ab. Das etwa senkrecht zu einer Deckelebene verlaufende Anschlagelement 39 ist in eine Durchgangsbohrung 40 der Karosseriemulde 2 eingedreht. Das Anschlagelement 39 umfaßt ein zylindrisches Innenteil 41 mit einer angeformten Mutter 42, wobei oberhalb der Mutter 42 auf einem Gewindeabschnitt 43 des Innenteils 41 ein elastischer Puffer 44 aufgesetzt ist.

In Fig. 6 ist eine weitere Ausführungsform einer Verstelleinrichtung 18 für die Klappe 11 dargestellt. Die Klappe 11, das Scharnier 13, die Karosseriemulde 2, das Anschlagelement 39 sowie die zylindrische Aufnahme 23 sind dabei identisch ausgebildet wie bei der zuvor beschriebenen Ausführung. Anstelle des Spreizkegels 20 und des Klemmteiles 22 ist das axiale Spannelement 21 von einem Gummielement 45 umgeben, das in die Aufnahme 23 einsetzbar und in axialer Richtung verschiebbar und feststellbar ist. Am zylindrischen Gummielement 45 ist eine Durchführöffnung 46 für das Spannelement 21 vorgesehen. Die Härte des Gummielementes beträgt etwa 80 bis 100 Shore A. Durch Anziehen des Spannelementes 21 wird das Gummielement 45 radial aufgeweitet und verspannt sich mit der Aufnahme 23.

Der Scharnierarm 17 erstreckt sich zwischen einer Stirnseite 47 des Gummielementes 45 und einer sich am Kopf 48 des Spannelementes 21 abstützenden Scheibe 49, wobei diese einen größeren Durchmesser aufweist als der Kopf 48 des Spannelementes 21. Zur Einstellbarkeit in Richtung D—D und Richtung E—E weist das Scharnier 13 ebenfalls eine Bohrung 36 mit einem wesentlich größeren Durchmesser auf als der Schaftdurchmesser des Spannelementes 21.

Auf das dem Kopf des Spannelementes 21 abgekehrte Ende ist einer Mutter 50 aufgedreht, die sich an einer kreisförmigen Platte 51 aus Metall abstützt. Die kreisförmige Platte 51 ist auf das Gummielement 45 aufvulkanisiert und weist einen geringfügig kleineren Durchmesser auf als die Aufnahme 23.

**Patentansprüche**

1. Klappe zum Verschließen einer Karosseriemulde, insbesondere Tankklappe für ein Kraftfahrzeug, die mittels eines Scharniers drehbar angelenkt ist, wobei ein Scharnierarm an der Karosseriemulde befestigt ist, dadurch gekennzeichnet, daß der der Karosseriemulde (2) zugekehrte Scharnierarm (17) unter Zwischenschaltung einer Verstelleinrichtung (18) an der Karosseriemulde (2) in Lage gehalten ist.

2. Klappe nach Anspruch 1, dadurch gekennzeichnet, daß die Verstelleinrichtung (18) einen mit einem axialen Spannelement (21) zusammenwirkenden, inneren Spreizkegel (20) aufweist, der in Wirkverbindung mit einem äußeren Klemmteil (22) steht, das axial verschiebbar und festlegbar in einer Aufnahme (23) der Karosseriemulde (2) gelagert ist und daß die Verstelleinrichtung (18) ferner eine am Scharnierarm (17) vorgesehene Bohrung (36) zum Hindurchführen des Spannelementes (21) umfaßt, wobei der Durchmesser der Bohrung (36) wesentlich größer ist als der Schaftdurchmesser des Spannelementes (21).

3. Klappe nach Anspruch 2, dadurch gekennzeichnet, daß eine Mittelachse (24, 24') der Aufnahme (23) etwa parallel zu einer Bodenwand (6) der Karosseriemulde (2) verläuft.

4. Klappe nach Anspruch 2, dadurch gekennzeichnet, daß die Aufnahme (23)—in der Draufsicht gesehen—seitlich außerhalb der Klappe (11) an der Karosseriemulde (2) angeordnet ist.

5. Klappe nach Anspruch 2, dadurch gekennzeichnet, daß die Aufnahme (23) zylinderförmig und an ihren beiden Enden offen ausgebildet ist.

6. Klappe nach Anspruch 1, dadurch gekennzeichnet, daß der in die Karosseriemulde (2) hineinragende Scharnierarm (17) mit seinem freien Ende zwischen einer aus der Aufnahme hervorstehenden Stirnseite (33) des Klemmteiles (22) und einer benachbart einem Kopfabschnitt (34) des Spannelementes (21) angebrachten Scheibe (35) eingespannt ist.

7. Klappe nach Anspruch 1, dadurch gekennzeichnet, daß das Klemmteil (22) durch den Spreizkegel (20) radial aufgeweitet wird und sich an der Aufnahme (23) abstützt.

8. Klappe nach Anspruch 1, dadurch gekennzeichnet, daß in die Aufnahme (23) eine zylindrische Lagerbuchse (37) aus Metall eingesetzt ist.

9. Klappe nach Anspruch 1, dadurch gekennzeichnet, daß der Spreizkegel (20) einen Gewindeeinsatz (29) mit einem Innengewinde (27) aufweist, das mit dem Spannelement (21) zusammenwirkt.

10. Klappe nach Anspruch 1, dadurch gekennzeichnet, daß zwei mit Abstand zueinander angeordnete Spannelemente (21) zum Festlegen des Scharnierarmes (17) vorgesehen sind.

11. Klappe nach Anspruch 1, dadurch gekennzeichnet, daß sich ein dem Scharnier (13) abgekehrter Bereich (38) der Kappe (11) in der Schließstellung (B) an einem einstellbaren Anschlagelement (39) abstützt.

12. Klappe nach Anspruch 1, dadurch gekennzeichnet, daß die Karosseriemulde (2) durch ein topfförmiges Bauteil aus Kunststoff gebildet wird, das an die Innenseite der angrenzenden Karosserieaußenwand (9) aufgesetzt ist, wobei zwischen dem Bauteil und der Karosserieaußenwand (9) ein Klebeelement (10) vorgesehen ist.

13. Klappe nach Anspruch 1, dadurch gekennzeichnet, daß das etwa senkrecht zu einer Deckelebene (C—C) verlaufende Anschlagelement (39) in die Karosseriemulde (2) eingeschraubt ist.

14. Klappe nach Anspruch 1, dadurch gekennzeichnet, daß zwischen dem Spreizkegel (20) und dem Klemmteil (22) eine Verdrehsicherung (30) vorgesehen ist.

15. Klappe nach Anspruch 1, dadurch gekennzeichnet, daß die Verstelleinrichtung (18) ein in die Aufnahme (23) der Karosseriemulde (2) eingesetztes, axial verschiebbares und festlegbares Gummielement (45) umfaßt, das mittels eines axialen Spannelementes (21) mit der Aufnahme (23) verspannt ist, wobei der Scharnierarm (17) an einer aus der Aufnahme (23) herausragenden Stirnseite (47) des Gummielementes (45) anliegt.

16. Klappe nach Anspruch 15, dadurch gekennzeichnet, daß das Gummielement (45) eine Härte von 80—100 Shore A aufweist.

**Revendications**

1. Volet pour obturer une cavité de carrosserie, en particulier volet de réservoir pour un véhicule automobile, qui est monté pivotant à l'aide d'une charnière, un bras de charnière étant fixé à la cavité de carrosserie, caractérisé en ce que le bras de charnière (17) qui est tourné vers la cavité de carrosserie est maintenu en position par interposition d'un dispositif de réglage (18) sur la cavité de carrosserie (2).

2. Volet selon la revendication 1, caractérisé en ce que le dispositif deréglage (18) présente un cône d'écartement intérieur (20) coopérant avec un élément de serrage axial (21), qui est en relation fonctionnelle avec une partie de serrage extérieure (22) qui peut être montée dans un logement (23) de la cavité de carrosserie (2) en étant mobile et blocable axialement et que le dispositif de réglage (18) comprend en outre un trou (36) prévu sur le bras de charnière (17), pour faire passer l'élément de serrage (21), le diamètre du trou (36) étant sensiblement plus grand que le diamètre de tige de l'élément de serrage (21).

3. Volet selon la revendication 2, caractérisé en ce qu'un axe (24, 24') du logement (23) s'étend à peu près parallèlement à une paroi de fond (6) de la cavité de carrosserie (2).

4. Volet selon la revendication 2, caractérisé en ce que—en vue de dessus—le logement (23) est disposé latéralement à l'extérieur du volet (11), sur la cavité de carrosserie (2).

5. Volet selon la revendication 2, caractérisé en ce que le logement (23) est de forme cylindrique et ouvert à ses deux extrémités.

6. Volet selon la revendication 1, caractérisé en ce que le bras de charnière (17) qui pénètre dans la cavité de carrosserie (2) est serré, avec son extrémité libre, entre une face frontale (33), dépassant du logement, de la partie de serrage (22) et une rondelle (35) montée au voisinage d'une section de tête (34) de l'élément de serrage (21).

7. Volet selon la revendication 1, caractérisé en ce que la partie de serrage (22) est élargie radialement au moyen du cône d'écartement (20) et s'appuie sur le logement (23).

8. Volet selon la revendication 1, caractérisé en ce qu'une douille cylindrique (37) en métal est insérée dans le logement (23).

9. Volet selon la revendication 1, caractérisé en ce que le cône d'écartement (20) présente un insert fileté (29) avec un taraudage (27), qui coopère avec l'élément de serrage (21).

10. Volet selon la revendication 1, caractérisé en ce que deux éléments de serrage (21) disposés à distance l'un de l'autre sont prévus pour fixer le bras de charnière (17).

11. Volet selon la revendication 1, caractérisé en ce que la zone (38) du volet (11) qui est éloignée de la charnière (13) s'appuie, en position de fermeture, sur un élément de butée (39) réglable.

12. Volet selon la revendication 1, caractérisé en ce que la cavité de carrosserie (2) est formée par un élément de construction en forme de pot, réalisé en matière plastique, qui est appliqué sur la face intérieure de la paroi extérieure de carrosserie (9) limitrophe, un élément adhésif (10) étant prévu entre l'élément de construction et la paroi extérieure de carrosserie (9).

13. Volet selon la revendication 1, caractérisé en ce que l'élément de butée (39) s'étendant à peu près perpendiculairement à un plan du couvercle (C—C) est vissé dans la cavité de carrosserie (2).

14. Volet selon la revendication 1, caractérisé en ce qu'une sécurité de rotation (30) est prévue entre le cône d'écartement (20) et la partie de serrage (22).

15. Volet selon la revendication 1, caractérisé en ce que le dispositif de réglage (18) comprend un élément en caoutchouc (45) déplaçable et blocable axialement dans le logement (23) de la cavité de carrosserie (2), élément (45) qui est serré avec le logement (23) au moyen d'un élément de serrage axial (21), le bras de charnière (17) appuyant sur une face frontale (47), ressortant du logement (23), de l'élément en caoutchouc (45).

16. Volet selon la revendication 15, caractérisé en ce que l'élément en caoutchouc (45) présente une dureté de 80 à 100 Shore A.

**Claims**

1. A lid for closing a bodywork hollow, in particular a tank lid for a motor vehicle, which is pivotably articulated by means of a hinge, one arm of the hinge being secured to the bodywork hollow, characterized in that the hinge arm (17) facing the bodywork hollow (2) is held in position on the bodywork hollow (2) with the interposition of an adjustment device (18).

2. A lid according to Claim 1, characterized in that the adjustment device (18) comprises an inner spreading cone (20) cooperating with an axial clamping element (21) and operatively connected to an outer clamping member (22) mounted so as to be axially displaceable and securable in a receiving means (23) in the bodywork hollow (2), and the adjustment device (18) further comprises a bore (36) provided on the hinge arm (17) for passing through the clamping element (21), the diameter of the bore (36) being substantially greater than the shaft diameter of the clamping element (21).

3. A lid according to Claim 2, characterized in that a median axis (24, 24') of the receiving means (23) extends approximately parallel to a base wall (6) of the bodywork hollow (2).

4. A lid according to Claim 2, characterized in that the receiving means (23) is arranged on the bodywork hollow (2) laterally outside the lid (11) as seen in plan view.

5. A lid according to Claim 2, characterized in that the receiving means (23) is made cylindrical and open at both ends.

6. A lid according to Claim 1, characterized in that the hinge arm (17) projecting into the bodywork hollow (2) is clamped with its free end between an end face (33) of the clamping member (22) projecting out of the receiving means and a disc (35) arranged adjacent to a head portion (34) of the clamping element (21).

7. A lid according to Claim 1, characterized in that the clamping member (22) is enlarged radially by the expanding cone (20) and is supported on the receiving means (23).

8. A lid according to Claim 1, characterized in that a cylindrical bearing bush (37) of metal is inserted into the receiving means (23).

9. A lid according to Claim 1, characterized in that the expanding cone (20) comprises a threaded insert (29) having an internal thread (27) cooperating with the clamping element (21).

10. A lid according to Claim 1, characterized in that two clamping elements (21) arranged at a distance from each other are provided for fastening the hinge arm (17).

11. A lid according to Claim 1, characterized in that an area (38) of the lid (11) remote from the hinge (13) is supported in the closed position (B) on an adjustable stop element (39).

12. A lid according to Claim 1, characterized in that the bodywork hollow (2) is formed by a cup-shaped component of plastics material mounted on the inside of the adjacent outer wall (9) of the bodywork, an adhesion element (10) being provided between the component and the outer wall (9) of the bodywork.

13. A lid according to Claim 1, characterized in that the stop element (39) extending approximately at right angles to a plane (C—C) of the cover is screwed into the bodywork hollow (2).

14. A lid according to Claim 1, characterized in that a means (30) to prevent rotation is provided between the expanding cone (20) and the clamping member (22).

15. A lid according to Claim 1, characterized in that the adjustment device (18) comprises an axially displaceable and securable rubber element (45) inserted into the receiving means (23) of the bodywork hollow (2) and clamped to the receiving means (23) by means of an axial clamping element (21), the hinge arm (17) resting against an end face (47) of the rubber element (45) projecting out of the receiving means (23).

16. A lid according to Claim 15, characterized in that the rubber element (45) has a hardness of from 80 to 100 Shore A.

FIG.1

1

FIG. 2

FIG.3

FIG.4

FIG.5

FIG.6